# FASCICULE DE BREVET EUROPEEN

(11) **EP 1 077 641 B1**
(45) Date de publication et mention de la délivrance du brevet: **11.12.2002**
(21) Numéro de dépôt: 99918070.6
(22) Date de dépôt: 14.05.1999
(51) Int. Cl.: G06K 9/00

(54) **CAPTEUR OPTIQUE D'EMPREINTE DIGITALE COMPACT**
KOMPAKTER OPTISCHER SENSOR FUER DIGITALEN FINGERABDRUCK
COMPACT OPTICAL FINGERPRINT SENSOR

(30) Priorité: 14.05.1998 FR 9806090
(43) Date de publication de la demande: 28.02.2001
(73) Titulaire: SAGEM S.A., 75116 Paris (FR)
(72) Inventeur: HALLIBERT, Pascal, F-75013 Paris (FR)
(74) Mandataire: Bloch, Gérard
(86) Numéro de dépôt international: FR9901156
(87) Numéro de publication internationale: WO99058057

(56) Documents cités:
- EP-A- 0 778 541
- EP-A- 0 813 165
- WO-A-97/41527
- US-A- 4 932 776
- US-A- 5 426 296

## Description

L'invention concerne un capteur optique de détection d'empreinte digitale destiné à prendre des vues d'empreintes digitales. Il arrivera qu'on confonde l'empreinte digitale et le relief de la peau du doigt qui en est la source d'empreinte, mais le lecteur l'admettra certainement.

On trouve des capteurs de ce type notamment dans des systèmes d'identification destinés à sécuriser l'accès à un lieu protégé, ou à contrôler l'identité d'un porteur de carte personnelle (carte d'identité, carte d'assuré social, etc.), par exemple.

Généralement, un capteur d'empreinte digitale comprend un prisme, avec une face support de l'empreinte digitale sur laquelle la personne à identifier doit poser son doigt, une source d'éclairage de l'empreinte, un module de prise de vues, avec une surface de détection, et un système optique, par exemple une lentille, interposé entre le prisme et la surface de détection et destiné à focaliser l'image de l'empreinte sur la surface de détection.

Un tel capteur optique d'empreinte digitale s'avère structurellement complexe et encombrant.

Par EP 0 813 165, on connaît également un capteur d'empreinte digitale à fibres optiques, peu encombrant mais de coût élevé.

WO 97 41527 décrit un capteur d'empreinte digitale comprenant un corps de transmission optique destiné à recevoir un doigt, des moyens d'éclairage et des moyens de prise de vue selon des angles correspondant aux incidences de rayons lumineux des moyens d'éclairage. Ce capteur comprend un système externe au corps de transmission optique.

La présente invention propose un capteur optique d'empreinte digitale à la foi simple, peu encombrant et économique. Elle est definie dans la revendication 1 ci-jointe.

A cet effet, l'invention concerne un capteur optique d'empreinte digitale comprenant un corps de transmission optique avec une surface de réception destinée à recevoir un doigt dont une vue de l'empreinte doit être prise, des moyens d'éclairage du doigt, des moyens de prise de vues avec une surface de détection pour prendre une vue du doigt à travers le corps de transmission optique et ainsi en capter l'empreinte, selon des angles de prise de vues correspondant aux incidences de rayons lumineux des moyens d'éclairage, dirigée sur la surface de réception à réflexion totale sur les sillons de l'empreinte du doigt, capteur caractérisé par le fait que le corps de transmission optique comporte une surface de détermination du grandissement entre l'empreinte digitale et son image, agencée pour diriger les rayons lumineux des moyens d'éclairage vers l'empreinte et pour modifier les trajets optiques des rayons lumineux provenant des moyens d'éclairage de façon à ce que les rayons lumineux, qui se réfléchissent sur les sillons de l'empreinte du doigt, viennent frapper la surface de détection des moyens de prise de vues, en sortant du corps sans rencontrer d'élément optique de prise de vues.

Il est clair qu'il faut entendre par sillons de l'empreinte les zones de l'empreinte correspondant aux zones de la peau du doigt non en contact avec le corps de transmission optique. Bien évidemment, l'image de l'empreinte s'entend de la vue de l'empreinte prise par les moyens de prise de vues.

La surface de détermination du grandissement oriente les rayons d'éclairage, de façon à ce que les rayons à réflexion totale sur les sillons de l'empreinte se dirigent vers a surface de détection. Grâce à cela, les rayons lumineux réfléchis par les zones de la surface de réception, correspondant aux sillons de l'empreinte, selon donc une détection ombroscopique, viennent, à la sortie dû corps de transmission optique, directement frapper la surface de détection, sans modification de leur puissance optique, par exemple par transmission à travers un système optique tel que la lentille de focalisation du capteur optique de l'art antérieur. Il en résulte que le capteur de l'invention est structurellement plus simple et plus compact. En outre, grâce à la surface de détermination du grandissement, l'image de l'empreinte digitale ne déborde pas en dehors de la surface de détection.

La surface de détermination du grandissement est agencée pour diriger les rayons lumineux des moyen d'éclairage vers l'empreinte.

Ainsi, les rayons d'éclairage frappent d'abord la surface de détermination du grandissement avant de venir éclairer l'empreinte.

La surface de détermination du grandissement peut être agencée pour modifier les trajets optiques des rayons lumineux par réflexion ou par diffraction.

De préférence encore, la surface de détermination du grandissement est courbe. Elle peut être sphérique ou asphérique, cylindrique.

De préférence, le corps de transmission optique comportant une surface de réception de l'empreinte digitale, la surface de détection des moyens de prise de vues est parallèle à ladite surface de réception de l'empreinte.

Grâce à cela, on évite les distorsions d'image.

L'invention sera mieux comprise à l'aide de la description suivante d'une forme de réalisation particulière du capteur optique d'empreinte digitale de l'invention en référence au dessin annexé sur lequel:

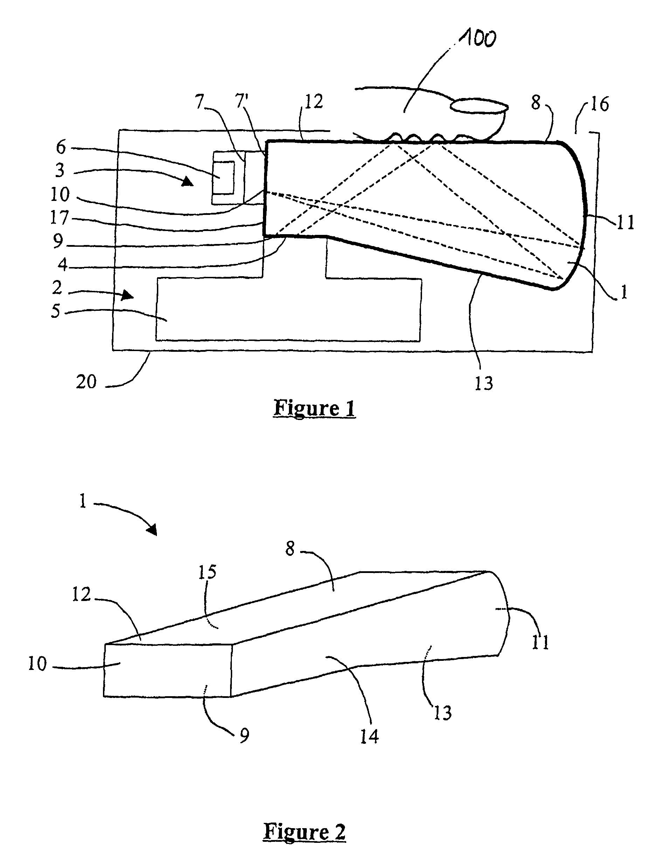

- la figure 1 représente une vue schématique du capteur optique selon la forme de réalisation particulière de l'invention;
- la figure 2 représente une vue schématique, en perpective, de l'avant, d'un corps de transmission optique de la figure 1;
- la figure 3 représente une vue en perpective, de l'arrière, du corps de transmission optique de la figure 2 et
- la figure 4 représente un schéma illustrant la loi optique de Descartes.

Dans l'exemple particulier de la description, le capteur optique est intégré dans un dispositif d'identification et destiné à prendre des vues d'un doigt d'une personne à identifier afin d'en capter l'empreinte digitale.

Le capteur optique comprend, dans un boîtier 20, un corps de transmission optique 1, un module de prise de vues 2, un module d'éclairage 3, un bloc d'alimentation destiné à alimenter électriquement les différents éléments du capteur et un bloc de contrôle destiné à contrôler le fonctionnement du capteur. Le bloc d'alimentation et le bloc de contrôle ne sont pas représentés.

Le module de prise de vues 2 comprend une surface de détection 4, consistant ici en une matrice CCD (Charge Coupled Device), à deux dimensions, de cellules photosensibles faisant fonction de photomètres, et un bloc électronique 5 de traitement de signaux électriques délivrés par les cellules photosensibles et d'élaboration de vues, d'images, de l'empreinte à capter.

Le module d'éclairage 3 comprend une source de lumière 6, en l'espèce une diode électroluminescente (LED), destinée à émettre un faisceau lumineux d'éclairage, ainsi qu'un diaphragme de champ 7' et un diaphragme d'entrée 7 interposé entre la LED et le diaphragme de champ 7'. Les diaphragmes 7, 7' sont destinés à conformer le faisceau lumineux de la LED 6, de façon à obtenir, à la sortie du module d'éclairage 3, un faisceau lumineux divergent et ayant un angle solide déterminé, comme cela sera explicité plus loin.

Le corps de transmission optique 1 consiste en un prisme, ici en verre, et comporte essentiellement:
- une surface supérieure 8 de réception du doigt dont on veut capter l'empreinte,
- une surface inférieure de prise de vues 9, à travers laquelle le module de prise de vues 2 est destiné à prendre des vues du doigt,
- une surface avant 10 d'entrée des rayons lumineux émis par le module d'éclairage 3 et
- une surface arrière 11 de détermination du grandissement entre l'empreinte digitale et son l'image sur la surface de détection 4.

La surface de réception 8, la surface de prise de vues 9 et la surface d'entrée 10 sont planes. La surface 11 de détermination du grandissement est courbe et ici sphérique, convexe vers l'extérieur du prisme 1.

La surface arrière 11, de détermination du grandissement, est située en regard de la surface avant d'entrée 10, sur les trajets optiques des rayons lumineux émis par le module d'éclairage 3. La distance séparant sensiblement la surface d'entrée 10 et la surface de détermination du grandissement 11 est une distance déterminée L, explicitée plus loin. Cette surface 11 est ici réfléchissante et destinée à modifier, par réflexion, les trajets optiques des rayons. lumineux du module d'éclairage 2 en les dirigeant vers la surface de réception 8 selon des directions correspondant à des angles d'incidence déterminés sur cette surface 8.

La surface inférieure de prise de vues 9 est parallèle à la surface de réception supérieure 8 et disposée sur les trajets optiques des rayons lumineux provenant du module d'éclairage 3 et à réflexion totale sur les sillons de l'empreinte, comme cela sera explicité plus loin. La distance entre la surface supérieure 8 et la surface inférieure 9, correspondant à la hauteur du prisme, est également une distance déterminée H, explicitée plus loin.

En outre, la surface avant d'entrée 10 est sensiblement orthogonale aux surfaces supérieure et inférieure 8, 9.

Le boîtier 20 ménage une ouverture 16 au droit de la surface de réception 8, afin de permettre la pose du doigt dont l'empreinte doit être captée, sur la surface de réception 8.

La surface 8 de réception du doigt, est reliée, à l'arrière, à la surface arrière 11, et se prolonge, à l'avant, par une surface 12, située à l'intérieur du boîtier 20, reliant la surface de réception 8 et la surface avant d'entrée 10. La surface de prise de vues 9 est reliée, à l'avant, à une surface 17 qui prolonge vers le bas la surface avant 10, et se prolonge elle-même, à l'arrière, par une surface inclinée 13 reliant la surface inférieure 9 et la surface arrière 11.

Enfin, le prisme comporte deux surfaces latérales 14, 15, ici orthogonales aux surfaces 8, 9 et 10.

Le module d'éclairage 3 est placé, et ici collé, contre la surface d'entrée 10, les diaphragmes 7 et 7' étant interposés entre la source de lumière 6 et la surface 10.

La surface de détection 4 est également placée, collée, contre la surface de prise de vues 9, et donc parallèle à la surface de réception 8. La surface de détection 4 est destinée à prendre des vues d'un doigt posé sur la surface de réception 8, à travers le prisme 1, selon des angles de prise de vues correspondant aux incidences de rayons lumineux du module d'éclairage 3 à réflexion totale sur les sillons de l'empreinte du doigt, sans modification de puissance optique entre le prisme 1 et le module de prise de vues 2, comme cela sera explicité plus loin. L'angle de prise de vues s'entend de l'angle formé par un rayon incident, frappant la surface de détection 9 en un point d'incidence, et la normale à cette surface de détection 9.

On soulignera que les dispositions respectives du module d'éclairage 3 et du module de prise de vues 2, tous deux collés contre le prisme 1, contribuent à une meilleure compacité du capteur.

Après la description structurelle du capteur, son fonctionnement pour la capture de l'empreinte d'un doigt 100 d'une personne à identifier va maintenant être décrit.

La personne à identifier pose son doigt 100, à travers l'ouverture 16, sur la surface de réception 8.

Le module d'éclairage 3 émet un faisceau de rayons lumineux divergents, présentant un angle solide déterminé Ω. D'emblée, on notera que l'on appelle "rayons lumineux d'éclairage", les rayons provenant du module d'éclairage 2.

Ces rayons lumineux d'éclairage pénètrent dans le prisme 1 par la surface avant d'entrée 6 et se propagent à l'intérieur du prisme 1, de l'avant vers l'arrière, avant de venir frapper la surface 11 de détermination du grandissement.

L'angle solide Ω du faisceau lumineux d'éclairage émis par le module d'éclairage 3 et la distance L entre la surface d'entrée 10 et la surface de détermination du grandissement 11 sont tels que les rayons d'éclairage frappent directement la surface arrière 11, sans rencontrer une autre surface du prisme 1.

Les rayons lumineux du module d'éclairage 3 sont réfléchis par la surface 11 de détermination du grandissement et les rayons réfléchis se propagent, à l'intérieur du prisme 1, vers la surface de réception 8, suivant des directions pour lesquelles les angles d'incidence des rayons lumineux d'éclairage sur la surface de réception 8 ont des valeurs déterminées, explicitées plus loin. La surface de détermination du grandissement 11 modifie ainsi, par réflexion, les trajets optiques des rayons lumineux du module d'éclairage 2, à l'intérieur du prisme 1.

L'angle d'incidence, ou "l'incidence", d'un rayon frappant sur une surface s'entend de l'angle formé par le rayon incident et la normale à la surface.

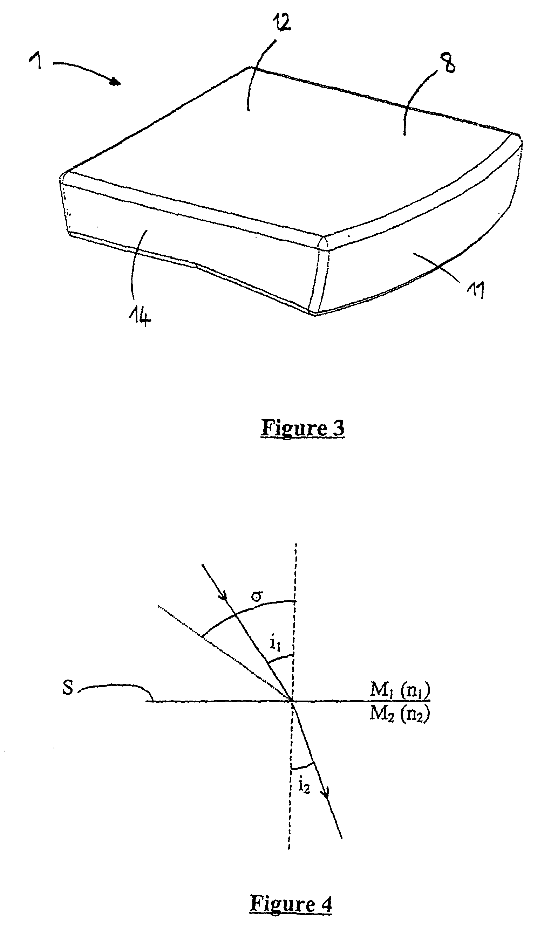

On rappelle ici, en référence à la figure 4, la loi optique de Descartes concernant la réfraction.

Soit deux milieux optiques M₁ et M₂, ayant chacun un indice de réfraction n₁ et n₂, et une surface S de séparation entre ces deux milieux M₁ et M₂. Soit un rayon lumineux se propageant du milieu M₁ vers le milieu M₂, frappant la surface S avec un angle d'incidence i₁ et transmis à travers la surface S dans le milieu M₂ avec un angle de réfraction i₂. L'angle de réfraction i₂ du rayon réfracté (c'est-à-dire l'angle entre le rayon réfracté et la normale à la surface S) obéit à la loi de Descartes:

Cette loi montre que, dans l'hypothèse où n₁ est supérieur à n₂, il existe un angle d'incidence limite σ tel que pour les angles d'incidence i₁ supérieurs à cet angle limite σ, il est impossible de calculer l'angle de réfraction correspondant i₂, la valeur de (n₁/n₂)*sini₁ étant supérieure à un. Ainsi, les rayons incidents, avec des angles d'incidence supérieurs à σ, sont totalement réfléchis par la surface S et ne sont donc pas transmis dans le milieu M₂. Ce phénomène est appelé la réflexion totale.

Appliquons maintenant la loi de Descartes au capteur optique de l'invention.

Les rayons lumineux du module d'éclairage 2, après réflexion sur la surface de détermination du grandissement 11, viennent frapper la surface de réception 8 avec des incidences déterminées.

Le relief du doigt 100 comprend des crêtes papillaires en contact avec la surface de réception 8 et des sillons, des creux, non en contact avec la surface de réception 8. De l'air sépare la surface de réception 8 et la peau du doigt constituant le fond des sillons.

La surface de réception 8 constitue une surface de séparation entre le milieu optique du prisme 1 et un autre milieu optique qui est soit l'air, pour les sillons de l'empreinte, soit la peau, pour les crêtes de l'empreinte. Les indices de réfraction du prisme, de l'air et de la peau, respectivement nₚᵣ, nₐ et nₚₑ, sont différents deux à deux et l'indice du prisme nₚᵣ est supérieur à l'indice de l'air nₐ.

Les incidences des rayons lumineux d'éclairage sur la surface de réception 8 sont déterminés suivant les valeurs des indices nₚᵣ, nₐ et nₚₑ, de façon à ce qu'il y ait réflexion totale des rayons d'éclairage incidents sur les sillons de l'empreinte et transmission partielle, à travers la surface de réception 8, des rayons d'éclairage incidents sur les crêtes de l'empreinte. En d'autres termes, les rayons d'éclairage frappant les zones de la surface 8 non en contact avec la peau du doigt 100 sont totalement réfléchis par la surface de réception 8, alors que les rayons d'éclairage frappant les zones de la surface de réception 8 en contact avec la peau du doigt 100 sont partiellement absorbés par celui-ci, une partie de l'énergie lumineuse des rayons incidents étant diffusée, à l'intérieur du prisme 1, dans toutes les directions, et par conséquent une très faible partie de l'énergie lumineuse étant diffusée dans chacune des directions de prise de vues du module 2.

Après réflexion sur les sillons de l'empreinte, les rayons lumineux se propagent à l'intérieur du prisme 1, de la surface de réception 8 vers la surface de prise de vues 9, et sortent du prisme 1 à travers cette surface de prise de vues 9, juste avant de venir frapper la surface de détection 4. On soulignera ici qu'en sortant du prisme 1, les rayons lumineux ne rencontrent aucun élément optique avant de frapper la surface de détection 4. Il en résulte que la prise de vues s'effectue sans perte de puissance optique entre le prisme 1 et la surface de détection 4.

De façon connue, les cellules photosensibles de la surface de détection 4 reçoivent essentiellement les rayons d'éclairage réfléchis par les sillons de l'empreinte, en mesurent l'énergie lumineuse et convertissent cette énergie en signaux électriques. Les rayons diffusés par les crêtes papillaires à l'intérieur du prisme, dans une direction de prise de vues déterminée, étant de très faible énergie, leur contribution dans l'énergie lumineuse mesurée par les cellules photosensibles est négligeable. Les signaux électriques sont ensuite traités par le bloc électronique 5 qui élabore une vue, une image de l'empreinte. Une succession de vues de l'empreinte est ainsi prise.

On soulignera que du fait de la réflexion totale sur les sillons de l'empreinte et de l'absorption des rayons par les crêtes papillaires, les vues de l'empreinte sont ainsi prises par ombroscopie. En d'autres termes, les images prises correspondent à des images d'une ombre virtuelle de l'empreinte.

La surface arrière 11, par sa forme, détermine le grandissement entre l'empreinte et son image, en d'autres termes le rapport des dimensions de l'empreinte et de son image sur la surface de détection 4. En effet, la surface arrière 11, par sa forme, détermine les directions, les incidences, des rayons lumineux frappant la surface de réception 8 et, par conséquent, les directions des rayons lumineux réfléchis correspondant, l'angle de réflexion de chacun des rayons réfléchis étant égal à l'angle d'incidence du rayon incident correspondant (l'angle de réflexion s'entendant de l'angle formé par le rayon réfléchi et la normale à la surface réfléchissante). Or, pour une distance déterminée H entre la surface de réception 8 et la surface de détection 4, les directions des rayons réfléchis sur les sillons de l'empreinte déterminent le rapport des dimensions de l'empreinte digitale et de son image dans le plan de la surface de détection 4.

Grâce à la surface de détermination du grandissement 11, les rayons lumineux, provenant de la source d'éclairage 2, se réfléchissent sur les sillons de l'empreinte puis viennent directement frapper la surface de détection 4, c'est-à-dire sans modification de leur puissance optique entre le prisme 1 et la surface de détection 4. En définitive, la surface 11 modifie les trajets optiques des rayons lumineux d'éclairage de façon à ce qu'ils rencontrent la surface de détection 4. Le corps de transmission optique 1 est ainsi agencé pour que la prise des vues s'effectue sans modification de puissance optique entre le corps optique 1 et la surface de détection 4.

En outre, la surface de détermination du grandissement 11 est conformée pour corriger les aberrations du système optique.

Au lieu de modifier les trajets optiques des rayons lumineux du module d'éclairage 2 par réflexion, la surface de détermination du grandissement pourrait être agencée pour modifier les trajets optiques des rayons par diffraction.

Au lieu d'être sphérique, la surface de détermination du grandissement pourrait être asphérique. Le terme "asphérique" est ici utilisé dans un sens large, une surface asphérique désignant une surface non sphérique. Il peut s'agir d'une surface asphérique, au sens optique du terme, par exemple une surface appartenant à la famille des coniques (hyperbolique, parabolique, etc.), ou d'une surface cylindrique.

Le prisme pourrait être en plastique, et obtenu par moulage.

## Revendications

1. Capteur optique d'empreinte digitale comprenant un corps de transmission optique (1) avec une surface de réception (8) destinée à recevoir un doigt (100) dont une vue de l'empreinte doit être prise, des moyens (3) d'éclairage du doigt (100), des moyens de prise de vues (2) avec une surface de détection (4) pour prendre une vue du doigt (100) à travers le corps de transmission optique (1) et ainsi en capter l'empreinte, selon des angles de prise de vues correspondant aux incidences de rayons lumineux des moyens d'éclairage (3), dirigée sur la surface de réception (8) à réflexion totale sur les sillons de l'empreinte du doigt (100), capteur **caractérisé par le fait que** le corps de transmission optique (1) comporte une surface (11) de détermination du grandissement entre l'empreinte digitale et son image, agencée pour diriger les rayons lumineux des moyens d'éclairage vers l'empreinte et pour modifier les trajets optiques des rayons lumineux provenant des moyens d'éclairage (3) de façon à ce que les rayons lumineux, qui se réfléchissent sur les sillons de l'empreinte du doigt, viennent frapper la surface de détection (4) des moyens de prise de vues (2), en sortant du corps (1) sans rencontrer d'élément optique.

2. Capteur optique selon la revendication 1, dans lequel la surface (11) de détermination du grandissement est agencée pour modifier les trajets optiques des rayons lumineux par réflexion.

3. Capteur optique selon la revendication 1, dans lequel la surface de détermination du grandissement est agencée pour modifier les trajets optiques des rayons lumineux par diffraction.

4. Capteur optique selon l'une des revendications 1 à 3, dans lequel la surface (11) de détermination du grandissement est courbe.

5. Capteur optique selon la revendication 4, dans lequel la surface (11) de détermination du grandissement est sphérique.

6. Capteur optique selon la revendication 4, dans lequel la surface de détermination du grandissement est asphérique.

7. Capteur selon l'une des revendications 1 à 6, dans lequel la surface (11) de détermination du grandissement est agencée pour corriger les aberrations.

8. Capteur optique selon l'une des revendications 1 à 7, dans lequel, la surface de détection (4) est parallèle à ladite surface de réception (8).

9. Capteur optique selon l'une des revendications 1 à 8, dans lequel le corps de transmission optique (1) comprend une surface de prise de vues (9), située sur les trajets optiques des rayons lumineux réfléchis sur les sillons de l'empreinte du doigt (100).

10. Capteur optique selon l'une des revendications 1 à 9, dans lequel le corps de transmission optique (1) comprend une surface (10) d'entrée des rayons lumineux, émis par les moyens d'éclairage (3), située en regard de la surface (11) de détermination du grandissement.

11. Capteur optique selon l'une des revendications 1 à 10, dans lequel les moyens d'éclairage (3) comprennent une source d'éclairage (6) destinée à émettre un faisceau lumineux, associée à au moins un diaphragme (7, 7') destiné à conformer ledit faisceau lumineux.

12. Capteur optique selon l'une des revendications 10 et 11, dans lequel les moyens d'éclairage (3) sont placés contre la surface d'entrée (10) du corps de transmission optique (1).

13. Capteur optique selon l'une des revendications 9 à 12, dans lequel, la surface de détection (4) des moyens de prise de vues (2) est placée contre la surface de prise de vues (9) du corps de transmission optique (1).

## Claims

1. Optical fingerprint sensor including an optical transmission body (1) having a reception surface (8) intended to receive a finger (100), an image of whose fingerprint is to be taken, illumination means (3) for the finger (100), imaging means (2) having a detection surface (4) for imaging the finger (100) through the optical transmission body (1) and thus sensing the fingerprint according to imaging angles corresponding to the incidences of light rays of the illumination means (3), directed onto the reception surface (8) with total reflection onto the grooves of the fingerprint of the finger (100), the sensor being **characterised by** the fact that the optical transmission body (1) comprises a surface (11) for determining the magnification between the fingerprint and its image, arranged in order to direct the light rays of the illumination means towards the fingerprint and in order to modify the optical paths of the light rays coming from the illumination means (3) so that the light rays, which are reflected onto the grooves of the fingerprint of the finger, strike the detection surface (4) of the imaging means (2), leaving the body (1) without encountering an optical element.

2. Optical sensor as claimed in Claim 1, wherein the surface (11) for determining the magnification is arranged in order to modify by reflection the optical paths of the light rays.

3. Optical sensor as claimed in Claim 1, wherein the surface for determining the magnification is arranged in order to modify by diffraction the optical paths of the light rays.

4. Optical sensor as claimed in any one of Claims 1 to 3, wherein the surface (11) for determining the magnification is curved.

5. Optical sensor as claimed in Claim 4, wherein the surface (11) for determining the magnification is spherical.

6. Optical sensor as claimed in Claim 4, wherein the surface for determining the magnification is aspheric.

7. Sensor as claimed in any one of Claims 1 to 6, wherein the surface (11) for determining the magnification is arranged in order to correct aberrations.

8. Optical sensor as claimed in any one of Claims 1 to 7, wherein the detection surface (4) is in parallel with said reception surface (8).

9. Optical sensor as claimed in any one of Claims 1 to 8, wherein the optical transmission body (1) includes an imaging surface (9), situated on the optical paths of the light rays reflected onto the grooves of the fingerprint of the finger (100).

10. Optical sensor as claimed in any one of Claims 1 to 9, wherein the optical transmission body (1) includes a surface (10) through which the light rays enter, which light rays are emitted by the illumination means (3) situated facing the surface (11) for determining the magnification.

11. Optical sensor as claimed in any one of Claims 1 to 10, wherein the illumination means (3) include an illumination source (6) intended to emit a light beam, which illumination source is associated with at least one diaphragm (7, 7') intended to shape said light beam.

12. Optical sensor as claimed in any one of Claims 10 and 11, wherein the illumination means (3) are placed against the entry surface (10) of the optical transmission body (1).

13. Optical sensor as claimed in any one of Claims 9 to 12, wherein the detection surface (4) of the imaging means (2) is placed against the imaging surface (9) of the optical transmission body (1).

## Patentansprüche

1. Optischer Sensor für Fingerabdrücke, umfassend einen optischen Übertragungskörper (1) mit einer Aufnahmefläche (8), die dazu bestimmt ist, einen Finger (100) aufzunehmen, von dem eine Ansicht des Abdrucks aufgenommen werden soll, Einrichtungen (3) zur Beleuchtung des Fingers (100), Aufnahmeeinrichtungen (2) mit einer Erfassungsfläche (4), um über den optischen Übertragungskörper (1) eine Aufnahme des Fingers (100) zu machen und somit dessen Abdruck entlang der Aufnahmewinkel aufzunehmen, welche dem Einfallen von Lichtstrahlen aus der Beleuchtungseinrichtung (3) entsprechen, die mit vollständiger Reflexion an den Rillen des Abdrucks des Fingers (100) auf die Aufnahmefläche (8) gerichtet sind, wobei der Sensor **dadurch gekennzeichnet ist, dass** der optische Übertragungskörper (1) eine Fläche (11) zur Bestimmung des Abbildungsmaßstabs zwischen dem Fingerabdruck und seinem Bild umfasst, welche so ausgelegt ist, dass sie die Lichtstrahlen aus den Beleuchtungseinrichtungen zum Abdruck hin lenkt, und dass sie die optischen Pfade der aus den Beleuchtungseinrichtungen (3) kommenden Lichtstrahlen so abändert, dass die Lichtstrahlen, die an den Rillen des Fingerabdrucks reflektiert werden, beim Verlassen des Körpers (1) auf die Erfassungsfläche (4) der Aufnahmeeinrichtungen (2) einfallen, ohne dabei auf ein optische Element zu treffen.

2. Optischer Sensor nach Anspruch 1, bei dem die Fläche (11) zur Bestimmung des Abbildungsmaßstabs so ausgelegt ist, dass sie die optischen Pfade der Lichtstrahlen durch Reflexion abändert.

3. Optischer Sensor nach Anspruch 1, bei dem die Fläche (11) zur Bestimmung des Abbildungsmaßstabs so ausgelegt ist, dass sie die optischen Pfade der Lichtstrahlen durch Beugung abändert.

4. Optischer Sensor nach einem der Ansprüche 1 bis 3, bei dem die Fläche (11) zur Bestimmung des Abbildungsmaßstabs gekrümmt ist.

5. Optischer Sensor nach Anspruch 4, bei dem die Fläche (11) zur Bestimmung des Abbildungsmaßstabs sphärisch ist.

6. Optischer Sensor nach Anspruch 4, bei dem die Fläche (11) zur Bestimmung des Abbildungsmaßstabs torisch ist.

7. Optischer Sensor nach einem der Ansprüche 1 bis 6, bei dem die Fläche (11) zur Bestimmung des Abbildungsmaßstabs so ausgelegt ist, dass sie Abbildungsfehler korrigiert.

8. Optischer Sensor nach einem der Ansprüche 1 bis 7, bei dem die Erfassungsfläche (4) parallel zur Aufnahmefläche (8) ist.

9. Optischer Sensor nach einem der Ansprüche 1 bis 8, bei dem der optische Übertragungskörper (1) eine Bildaufnahmefläche (9) umfasst, die auf den optischen Pfaden der Lichtstrahlen angeordnet ist, die an den Rillen des Abdrucks des Fingers (100) reflektiert werden.

10. Optischer Sensor nach einem der Ansprüche 1 bis 9, bei dem der optische Übertragungskörper (1) eine Eintrittsfläche (10) für die Lichtstrahlen umfasst, welche von den Beleuchtungseinrichtungen (3) ausgesandt werden, und diese Eintrittsfläche (10) der Fläche (11) zur Bestimmung des Abbildungsmaßstabs gegenüberliegend angeordnet ist.

11. Optischer Sensor nach einem der Ansprüche 1 bis 10, bei dem die Beleuchtungseinrichtungen (3) eine Lichtquelle (6) umfassen, welche dazu ausgelegt ist, ein Lichtbündel auszusenden, und wleche mindestens einer Blende (7, 7') zugeordnet ist, die dazu ausgelegt ist, das Lichtbündel gleichförmig auszubilden.

12. Optischer Sensor nach einem der Ansprüche 10 und 11, bei dem die Beleuchtungseinrichtungen (3) an der Eintrittsfläche (10) des optischen Übertragungskörpers (1) angebracht sind.

13. Optischer Sensor nach einem der Ansprüche 9 bis 12, bei dem die Erfassungsfläche (4) der Aufnahmeeinrichtungen (2) gegenüber der Bildaufnahmefläche (9) des optischen Übertragungskörpers angebracht ist.
